# EUROPÄISCHE PATENTSCHRIFT

(11) **EP 1 591 754 B1**
(45) Veröffentlichungstag und Bekanntmachung des Hinweises auf die Patenterteilung: **14.07.2010**
(21) Anmeldenummer: 05007612.4
(22) Anmeldetag: 07.04.2005
(51) Int. Cl.: G01C 21/26

(54) **Streckenvorausschau für Überholvorgänge**
Roadway evaluation for overtaking manoeuvres
Evaluation de parcours pour manoeuvres de dépassement

(30) Priorität: 29.04.2004 DE 102004021278; 07.06.2004 DE 102004027695
(43) Veröffentlichungstag der Anmeldung: 02.11.2005
(73) Patentinhaber: Daimler AG, 70327 Stuttgart (DE)
(72) Erfinder: Bracht, Alexander, 73730 Esslingen (DE); Mehren, Dirk, 71069 Sindelfingen (DE); Buck, Daniel, 89143 Blaubeuren (DE)
(74) Vertreter: Moore, Derek

(56) Entgegenhaltungen:
- EP-A- 1 298 417
- EP-A- 1 457 947
- WO-A-93/05492
- DE-A1- 10 027 418
- DE-A1- 10 160 900

## Beschreibung

Die Erfindung betrifft Einrichtungen in Fahrzeugen zur Information von Fahrzeugführern, beispielsweise über die Fahrstrecke und die aktuelle Position des Fahrzeugs. Verbreitet sind derartige Systeme zur Navigationsführung, die auf der Basis von GPS kontinuierlich eine Positionsbestimmung vornehmen und mittels gespeicherter Karten über das Straßennetz dem Fahrer Informationen zur vorausliegenden Straßenführung, z.B. optisch per Display oder auch akustisch per Sprachausgabe, wiedergeben. Diese Systeme bieten eine gute Zielführung, was insbesondere in einer unbekannten Stadt oder auch bei ungünstigen Sichtverhältnissen eine erhebliche Entlastung bewirkt.

Ein erweitertes System zur Wiedergabe von Informationen zur Straßenführung ist beschrieben in der EP 0773525 B1. Die in dieser Schrift vorgestellte Technik nutzt auf der Basis eines üblichen GPS-Navigationssystems zusätzlich gespeicherte Straßenprofilkarten, um daraus die Breite der aktuell befahrenen Strasse zu ermitteln. Als Ergebnis wird dem Fahrer die Fahrbahnbreite und evtl. die Anzahl der vorhandenen Fahrspuren angezeigt.

Insbesondere Überholmanöver sind kritische Situationen im Straßenverkehr und erfordern vom Fahrzeugführer eine hohe Konzentration. Die Einschätzung für einen möglichen Überholvorgang kann dabei für den Fahrer zusätzlich durch ungünstige Sichtverhältnisse (Dunkelheit, Regen) erschwert sein. Eine Unterstützung des Fahrers durch eine im Fahrzeug erfolgende automatische Streckenvorausschau mit Bewertung für evtl. Überholmöglichkeiten und deren Wiedergabe, z.B. durch Einblendung über Displays im Armaturenbereich, wäre daher sehr hilfreich.

Die Erfindung bezieht sich auf ein in der WO 93/05492 offenbartes System als nächstliegenden Stand der Technik. Aus der WO 93/05492 ist ein System zur Navigationshilfe für den Fahrer eines Fahrzeugs sowie ein Navigationssystem bekannt, welches Mittel zur Positions- und Fahrtrichtungserfassung sowie Mittel zur Speicherung digitaler Straßenkarten umfasst und bei welchem bei der Navigation zur Unterstützung des Fahrers als Bewertungskriterien Straßennetztopographie, Verkehrsschilder entlang des Straßennetzes, Hilfsdaten des Straßennetzes, Topologie von großen Straßenkreuzungen, zukünftige Manöver, die Fahrzeuggeschwindigkeit, physikalische Fahrerbedingungen und weitere Verkehrszeichen und Straßennetztopographien, die nicht das nächste Manöver aber folgende betreffen, ausgegeben werden.

Die EP 1 298 417 A1 zeigt zusätzlich zu dem System gemäß der zuvor genannten EP 0 773 525 B1 Mittel zur Auswertung, die aus den digitalen Straßenkarten Information zum vorausliegenden Streckenabschnitt extrahieren welche relevant für ein Überholmanöver sein können. Diese Informationen werden aufbereitet und dem Fahrer ausgegeben. Ihr liegt die Aufgabe zugrunde, ein System zur Information von Fahrzeugführern zu entwickeln, das dem Fahrer weitergehende Beschreibungen der vorausliegenden Straßenführung darbieten kann, so dass der Fahrzeugführer auf Grundlage dieser Informationen imstande ist, Überholmanöver besser vorauszuplanen. Diese Aufgabe wird gelöst durch das System gemäß Anspruch 1. Weitere vorteilhafte Ausgestaltungen des erfindungsgemäßen Systems sind Gegenstand der Unteransprüche. Die Erfindung wird im Folgenden anhand bevorzugter Ausführungsbeispiele beschrieben.

Die bisher bekannten Informationssysteme sind vorrangig als Navigationshilfe konzipiert und liefern daher nur Teilaspekte zum vorausliegenden Straßenverlauf. Für einen Fahrer, der ein vor ihm fahrendes Fahrzeug überholen möchte, ist es jedoch von besonderem Interesse, weitergehende Informationen über den unmittelbar vorausliegenden Streckenabschnitt zu erhalten, die ihm als Grundlage für eine Entscheidung, eventuell ein Überholmanöver einzuleiten, dienen können. Insbesondere bei Fahrten auf teilweise einspurig ausgeführten Strecken (z.B. Bundesstrassen) sind Überholmanöver besonders kritisch, da hier nur unter Nutzung der Gegenspur überholt werden kann.

Wichtige Informationen betreffen daher in erster Linie die Übersichtlichkeit des vorausliegenden Streckenabschnitts, also z.B. ob ein ausreichend langer Abschnitt der Gegenfahrbahn eingesehen werden kann. Daneben sind für Überholmanöver zusätzliche Angaben über die Beschaffenheit der vorausliegenden Strecke von Bedeutung, zu denen je nach Art der aktuell benutzten Straßenklasse auch die Anzahl vorhandener Fahrspuren oder die Fahrbahnbreite gehören können.

Das erfindungsgemäße System enthält als Basiseinheit ein konventionelles Navigationssystem mit Positionsbestimmung, z.B. mittels GPS. Die in derartigen Systemen heute eingesetzten, z.B. auf CD digital gespeicherten Straßenkarten enthalten i.a. bereits verschiedene Angaben, die eine erste Abschätzung für eine Streckenvorausschau ermöglichen. Dies sind beispielsweise gespeicherte Informationen über den Straßenverlauf (Kurven, Krümmung) oder auch Angaben zur Straßenbreite oder Spuranzahl, sowie zu Tunneln, Kreuzungen usw. Das erfindungsgemäße System nutzt speziell diese verfügbaren Daten und leitet mittels entsprechend ausgeführter Datenverarbeitungseinrichtungen aus der aktuellen Fahrzeugposition und Fahrtrichtung eine Streckenvorausschau unter dem Aspekt einer Eignung für mögliche Überholvorgänge ab. Dabei erfolgt vorzugsweise eine Klassifizierung, je nachdem ob die vorausliegende Strecke für ein Überholmanöver eher geeignet oder ungeeignet ist. Bewertungskriterien hierfür können aus verkehrstechnischen Erfahrungswerten vorgegeben sein. Beispielsweise sind kurvenreiche Strecken primär ungeeignet, ebenso einspurige und schmale Strassen, sowie Abschnitte mit Tunneln, Kreuzungen oder Abzweigungen. Bei leichter Richtungsänderung des Straßenverlaufs ist die Einsehbarkeit der vorausliegenden Strecke vom Krümmungsradius abhängig. Längere Streckenabschnitte ohne Kurven, breite oder mehrspurige Strassen bieten dagegen grundsätzlich gute Überholmöglichkeiten.

In einer erweiterten Ausführungsform weist das erfindungsgemäße System detailliertere digitale Straßenkarten auf, in denen - im Vergleich zu den in bisherigen Navigationssystemen enthaltenen Daten über das Straßennetz - weitergehende Informationen gespeichert sind. Diese Zusatzinformationen umfassen vorzugsweise Angaben zur Strasse selbst, wie z.B. Einsehbarkeit, Höhenprofil, Übersichtlichkeit, Markierungen, Straßenqualität (neuer Belag usw.) aber auch lokal geltende Verkehrsvorschriften (Überholverbot, Geschwindigkeitsbeschränkungen, usw.). Mit diesen Zusatzinformationen können vorausliegende Streckenabschnitte wesentlich genauer bewertet werden. Beispielsweise kann eine Strecke mit Kurven (primär eher ungeeignet) dennoch für Überholmanöver in Frage kommen, wenn eine gute Übersicht gegeben ist (flacher Verlauf in einer Ebene, keine Sichtbehinderungen). Auch Angaben über Höhenprofile sind von besonderer Bedeutung, da eine gerader Streckenabschnitt (primär für Überholmanöver geeignet), der über eine Kuppe führt, aufgrund der eingeschränkten Sichtweite für ein Überholmanöver eher nicht in Frage kommt (es sei denn, die Strasse ist mehrspurig ausgelegt). Durch einschränkende Verkehrsvorschriften (z.B. Überholverbot) können auch zunächst als geeignet identifizierte Streckenabschnitte nicht für Überholmanöver genutzt werden. Diese verschiedene Aspekte ergänzen sich dabei zu einer Gesamtbewertung und ermöglichen eine Einstufung vorausliegender Streckenabschnitte auf ihre Eignung für Überholmanöver mit erhöhter Qualität.

Für eine weiter detaillierte Klassifizierung kann das erfindungsgemäße System vorzugsweise so erweitert werden, dass neben Karteninformationen auch zusätzliche Parameter berücksichtigt werden können. Beispielsweise hängt die für ein Überholmanöver benötigte Zeit (und damit die Länge der Überholstrecke) direkt von der aktuellen Geschwindigkeit des Fahrzeugs ab. Zusätzlich spielt das Beschleunigungsvermögen (Motorleistung, Fahrzeuggewicht) eine wesentliche Rolle, um beispielsweise einen Überholvorgang zügig durchführen zu können und damit die kritische Überholphase möglichst abzukürzen. Diese Daten stehen in modernen Fahrzeugen für eine digitale Verarbeitung zur Verfügung und können in die Streckenbewertung einbezogen werden.

In einer erweiterten Ausführungsform berücksichtigt das erfindungsgemäße System verfügbare Informationen über die aktuellen Wetter- bzw. Witterungsverhältnisse. Nebel, starker Regen, Schneefall, einsetzender Frost können die Möglichkeiten für Überholmanöver stark einschränken. Auch der Sonnenstand (ggf. Blendung durch tiefstehende Sonne) oder die Helligkeit (Tag, Nacht, Dämmerung, Vollmond, Gegenlicht, Blendung durch Beleuchtungen) haben Einfluss auf die Bewertung der Fahrsituation hinsichtlich eines möglichen Überholmanövers. Weiterhin haben sich Informationen zum Straßenzustand ( z.B. Eis, Laub, Beton, Teer, Rollsplitt) bzw. zum Verkehrsaufkommen insbesondere auf der für das Überholen relevanten Spur vorzugsweise die Gegenspur als besonders relevant für eine Berücksichtigung für sich oder gemeinsam mit anderen Bewertungskriterien erwiesen. Beispielsweise wird bei hohem Verkehrsaufkommen ein Überholen weniger empfohlen als bei geringen und der Fahren entsprechend informiert. Informationen zu den Wetter- bzw. Witterungsverhältnissen oder auch den Verkehrsverhältnisseen oder auch Straßenverhältnissen werden beispielsweise von Verkehrsinformationszentralen drahtlos an Navigationsgeräte oder andere Assistenzsysteme übermittelt. Moderne Fahrzeuge sind zudem mit Sensoren ausgestattet, die entsprechende Daten bereitstellen.

In einer erweiterten Ausführungsform berücksichtigt das erfindungsgemäße System verfügbare Informationen über das Fahrverhalten vorausfahrender Fahrzeuge insbesondere hinsichtlich der Differenzgeschwindigkeit und/oder des Abstandes dieser untereinander und/oder zum eigenen Fahrzeug. Diese Informationen können durch Fahrzeugsensoren beispielsweise durch Radare ermittelt werden und einer Bewertung hinsichtlich einer Überholempfehlung oder nicht zugeführt werden und anschließend den Fahrzeugführer dementsprechend informiert werden. Insbesondere läßt sich das Beschleunigungsverhalten eines potentiell zu Überholenden Fahrzeuges mit dem eigenen Beschleunigungsvermögen vergleichen und daraus die Information für den Fahrer ableiten. Ist die Differenz zu gering wird von einem Überholvorgang gewarnt.

In einer erweiterten Ausführungsform berücksichtigt das erfindungsgemäße System verfügbare Informationen über eine durch ein Mittel zur Routenführung beispielsweise als Navigationsgerät geplante Route, wobei insbesondere die Entfernung zur nächsten geplanten Routenänderung als eines der Bewertungskriterien verwendet wird. Steht ein Abbiegen von der aktuellen Straße aufgrund der geplanten Route in kürze bevor (geringe Entfernung zum Ort der geplanten Routenänderung) so wird dieses Kriterium berücksichtigt der Fahren entsprechend informiert indem zum Beispiel von einem Überholen eher abgeraten wird.

Eine weitere Ausführungsform des erfindungsgemäßen System berücksichtigt das charakteristische Fahrverhalten eines Fahrers. Hierzu sind im Fahrzeug Mittel vorhanden, die während der Fahrt Aspekte eines individuellen Fahrstils detektieren und als Datensatz speichern. Ein sportlicher Fahrer nutzt beispielsweise die Motorleistung bei Beschleunigungsvorgängen in anderer Weise, als ein eher verhalten agierender Fahrer. Auf diese Weise kann für jeden Nutzer des Fahrzeugs ein Profil erstellt werden. Nutzt später derselbe Fahrer das Fahrzeug, so kann durch Vergleichsoperationen das charakteristische Profil erkannt und abgerufen werden. Da Überholvorgänge zu einem großen Teil vom Fahrstil bestimmt sind, sind derartige Profile für die Bewertung vorausliegender Strecken auf eine Eignung für Überholmanöver von erheblicher Bedeutung.

Dem Fahrer wird das Ergebnis der Streckenvorausschau beispielsweise in Form einer grafischen Darstellung auf einem Display wiedergegeben. Je nach Eignung der vorausliegenden Strecke für ein Überholmanöver können dabei entsprechende Hinweise durch Beschriftungen, Symbole, Farbgebung oder Blinkeffekte hervorgehoben werden. Ebenso können akustische Ausgaben, z.B. per Sprachgenerator, erfolgen. Auch weitere Angaben zur vorausliegenden Strecke können in dieser Form wiedergegeben werden. So kann dem Fahrer beispielsweise übermittelt werden, wie weit ein potenzieller Überholabschnitt noch entfernt ist, welche Ausdehnung ein vorausliegender Überholbereich hat oder auch ob der Überholabschnitt bei aktueller Fahrgeschwindigkeit und Beschleunigungsreserve lang genug für einen Überholvorgang ist. Auch eine Empfehlung nicht zu überholen kann Teil der Information an den Fahrer sein. Auch ein Hinweis auf positive Voraussetzungen für ein Überholen, was aufgrund der aufbereiteten Informationen ermittelt werden konnte, kann dem Fahrer zur Kenntnis gebracht werden. Bei einer besonders bevorzugten Ausbildung des Systems wird zusätzlich das Fahr- oder Fernlicht des Fahrzeugs eingeschaltet, damit das Fahrzeug mit dem System besser erkennbar ist, wodurch das Risiko für einen Unfall weiter verringert werden kann. Nach einem Überholvorgang kann das Licht wieder ausgeschaltet werden.

Die vom erfindungsgemäßen System bereitgestellten Informationen können entweder online von dem System ermittelt bzw. geschaffen werden oder als vorgefertigte Informationen situationsabhängig ausgelöst werden (Event-Konzept). Dabei sind die vorgefertigten Informationen (Hinweise an den Fahrer) vorzugsweise in einem aktualisierbaren Speichermedium hinterlegt.

Die vom erfindungsgemäßen System bereitgestellten Informationen sind für beabsichtigte Überholmanöver, insbesondere in Hinblick auf Verkehrssicherheit von entscheidender Bedeutung. Durch entsprechende Aufbereitung und Wiedergabe sind diese Hinweise vom Fahrer während der Fahrt leicht zu erfassen und in sein Fahrverhalten zu integrieren.

## Patentansprüche

1. System zur Navigationshilfe in Fahrzeugen zur Streckenvorausschau für Überholvorgänge, mit Mitteln zur Erfassung von Position und Fahrtrichtung des Fahrzeugs, Mitteln zur Speicherung digitaler Straßenkarten, Mitteln zur Auswertung der digitalen Straßenkarten in Abhängigkeit von der Position und Fahrtrichtung des Fahrzeugs, sowie Mitteln zur Ausgabe von Informationen,
wobei die Mittel zur Auswertung aus den digitalen Straßenkarten spezielle Informationen zum vorausliegenden Streckenabschnitt extrahieren, die im System als relevant für Überholmanöver vorgegeben sind und diese Informationen anhand vorgegebener Bewertungskriterien aufbereiten und wobei die so aufbereiteten Informationen dem Fahrer über die Mittel zur Ausgabe wiedergeben werden, wobei als Bewertungskriterien Fahrzeugeigenschaften wie z.B. Typ, Gewicht, Beschleunigungswerte usw. vorgegeben sind,
**dadurch gekennzeichnet,**
**dass** Mittel zur Erfassung der aktuellen Wettersituation und des Straßenzustandes und des Verkehrsaufkommens auf der Überholspur vorhanden sind und diese erfassten Daten zur Wettersituation, zum Straßenzustand und zum Verkehrsaufkommen auf der Überholspur sowie zusätzlich das Beschleunigungsvermögen des Fahrzeugs als Bewertungskriterien vorgegeben sind.

2. System nach Anspruch 1,
**dadurch gekennzeichnet,**
**dass** die extrahierten Informationen Merkmale des vorausliegenden Streckenabschnitts, wie z.B. die Straßenklasse, Straßenbreite, Markierungen, Anzahl pro Fahrtrichtung vorhandener Fahrspuren, vorhandene Tunnel, Kreuzungen oder Abzweigungen beinhalten.

3. System nach Anspruch 1 öder 2,
**dadurch gekennzeichnet,**
**dass** die extrahierten Informationen Angaben zum vorausliegenden Straßenverlauf, insbesondere über gerade Streckenabschnitte bzw. leichte Richtungsänderungen, Anzahl und Radien vorhandener Kurven, Einsehbarkeit sowie Steigungen bzw. Gefälle beinhalten.

4. System nach Anspruch 1, 2 oder 3,
**dadurch gekennzeichnet,**
**dass** die extrahierten Informationen auf dem vorausliegenden Streckenabschnitt geltende Verkehrsvorschriften, insbesondere Geschwindigkeitsbeschränkungen und Überholverbotszonen, beinhalten.

5. System nach einem der Ansprüche 1 bis 4,
**dadurch gekennzeichnet,**
**dass** Mittel zur Erfassung des Fahrverhaltens vorausfahrender Fahrzeuge insbesondere hinsichtlich der Differenzgeschwindigkeit und/oder des Abstandes vorhanden sind und diese Daten zur Fahrverhalten als Bewertungskriterien vorgegeben sind.

6. System nach einem der Ansprüche 1 bis 5,
**dadurch gekennzeichnet,**
**dass** ein Mittel zur Routenführung vorhanden ist und die Routendaten insbesondere die Entfernung zur nächsten geplanten Routenänderung als eines der Bewertungskriterien vorgegeben ist.

7. System nach einem der Ansprüche 1 bis 6,
**dadurch gekennzeichnet,**
**dass** Mittel zur Erfassung und Speicherung von Fahrerprofilen vorhanden sind und diese Daten als Bewertungskriterien vorgegeben sind.

8. System nach einem der Ansprüche 1 bis 7,
**dadurch gekennzeichnet,**
**dass** vorausliegende Streckenabschnitte in Abhängigkeit von den extrahierten Informationen und Bewertungskriterien klassifiziert werden.

9. System nach Anspruch 8,
**dadurch gekennzeichnet,**
**dass** aufbereitete Informationen zu unterschiedlich klassifizierten vorausliegenden Streckenabschnitten dem Fahrer über die Mittel zur Ausgabe in unterschiedlicher Weise, z.B. optisch durch verschiedene Symbole, Farbgebung, Blinken usw. oder akustisch über unterschiedliche Signaltöne usw. wiedergegeben werden.

10. System nach einem der Ansprüche 1 bis 9,
**dadurch gekennzeichnet,**
**dass** Mittel zur Steuerung des Fahr- oder Fernlichtes vorgesehen sind, und abhängig vom der wiedergebenden Information das Fahr- oder Fernlicht ein- oder ausgeschaltet wird.

## Claims

1. Navigational aid system in vehicles for roadway evaluation for overtaking manoeuvres, comprising means for detecting the position and the travelling direction of the vehicle, means for storing digital roadmaps, means for evaluating the digital roadmaps in dependence on the position and the travelling direction of the vehicle and means for outputting information,
wherein the evaluation means extract from the digital roadmaps specific data on the road section ahead which are preset as relevant for overtaking manoeuvres in the system and edits these data using preset evaluation criteria, and wherein the data thus edited are forwarded to the driver via outputting means, wherein the preset evaluation criteria include vehicle characteristics such as type, weight, acceleration values etc., **characterised in that**
means are provided for detecting the current weather and road conditions as well as the amount of traffic in the overtaking lane and **in that** these data on weather and road conditions and on the amount of traffic in the overtaking lane as well as the acceleration capacity of the vehicle are preset as evaluation criteria.

2. System according to claim 1,
**characterised in that**
the extracted data include features of the road section ahead, such as class of road, width of road, markings, number of lanes per direction of travel, existing tunnels, crossings or turnoffs.

3. System according to claim 1 or 2,
**characterised in that**
the extracted data include information on the route ahead, in particular on straight road sections or slight changes in direction, on the number and radii of existing bends, on visibility, uphill and downhill gradients.

4. System according to claim 1, 2 or 3,
**characterised in that**
the extracted data include information on traffic regulations applying to the road section ahead, in particular on speed restrictions and no overtaking zones.

5. System according to any of claims 1 to 4,
**characterised in that**
means are provided for detecting the driving behaviour of vehicles ahead, in particular with respect to differential speed and/or distance, and **in that** these data on driving behaviour are preset as evaluation criteria.

6. System according to any of claims 1 to 5,
**characterised in that**
a means for route guidance is provided, and **in that** the route data, in particular the distance from the next planned route change, are preset as one of the evaluation criteria.

7. System according to any of claims 1 to 6,
**characterised in that**
means are provided for detecting and storing driver profiles, and **in that** these data are preset as evaluation criteria.

8. System according to any of claims 1 to 7,
**characterised in that**
the road sections ahead are classified in dependence on the extracted data and the evaluation criteria.

9. System according to claim 8,
**characterised in that**
the edited data on differently classified road sections ahead are transmitted to the driver via the outputting means in different ways, for example visually by various symbols, colours, flashing etc. or audibly by different chimes etc.

10. System according to any of claims 1 to 9,
**characterised in that**
means are provided for controlling dipped or main beam, and **in that** the dipped or main beam is switched on or off in dependence on the information provided.

## Revendications

1. Système pour l'aide à la navigation dans des véhicules pour l'évaluation de parcours pour les manoeuvres de dépassement composé de moyens pour détecter la position et le sens de la marche du véhicule, de moyens pour enregistrer les cartes routières numériques, de moyens pour évaluer les cartes routières numériques en fonction de la position et du sens de la marche du véhicule ainsi que des moyens pour éditer des informations, les moyens d'évaluation extraient des cartes routières numériques des informations spéciales relatives au tronçon de parcours prévisionnel, qui sont définies comme pertinentes pour la manoeuvre de dépassement et traitent ces informations au moyen de critères d'estimation définis et transmettent les informations traitées au conducteur par le biais de moyens d'émission, les caractéristiques du véhicule sont définies en tant que critères d'évaluation comme par exemple le type, le poids, les valeurs de vitesse, etc., **caractérisé en ce que** des moyens de détection de la situation météorologique actuelle, de l'état de la voie routière et de la densité du trafic sur la voie de dépassement existent et ces données déterminées relatives à la situation météorologique, à l'état de la voie et à la densité du trafic sur la voie de dépassement ainsi que la capacité d'accélération du véhicule sont définis en tant que critères d'évaluation

2. Système selon la revendication 1, **caractérisé en ce que** les informations extraites contiennent des caractéristiques du tronçon de parcours prévisionnel, comme par exemple, la classification routière, la largeur de la voie, les marquages, le nombre de voies de circulation existantes dans le sens de la marche, les tunnels, croissements et bifurcations existants.

3. Système selon la revendication 1 ou 2, **caractérisé en ce que** les informations extraites contiennent des indications sur le tracé de route prévisionnel, en particulier des tronçons de parcours droits ou de légers changements de direction, le nombre et les rayons des virages existants, la visibilité ainsi que les montées ou les descentes.

4. Système selon la revendication 1, 2 ou 3, **caractérisé en ce que** les informations extraites relatives au tronçon de parcours prévisionnel contiennent des réglementations de la circulation en vigueur en particulier des limitations de vitesses et des zones d'interdiction de dépassement.

5. Système selon l'une quelconque des revendications 1 à 4, **caractérisé en ce qu'**il existe des moyens de détection du comportement de conduite des véhicules qui précèdent en particulier en ce qui concerne la vitesse différentielle et / ou la distance et **en ce que** ces données relatives au comportement de conduite sont définies en tant que critères d'estimation.

6. Système selon l'une quelconque des revendications 1 à 5, **caractérisé en ce qu'**il existe un moyen d'itinéraire de guidage et **en ce que** les données d'itinéraire en particulier la distance par rapport au prochain changement d'itinéraire prévu sont définies en tant que l'un des critères d'estimation.

7. Système selon l'une quelconque des revendications 1 à 6, **caractérisé en ce qu'**il existe des moyens de détection et d'enregistrement des profils de conducteur et **en ce que** ces données sont définies en tant que critères d'estimation.

8. Système selon l'une quelconque des revendications 1 à 7, **caractérisé en ce que** des tronçons de parcours prévisionnels sont classifiés en fonction des informations extraites et des critères d'estimation.

9. Système selon la revendication 8, **caractérisé en ce que** les informations traitées relatives aux tronçons de parcours prévisionnels classifiées de différentes manières sont retransmises au conducteur par le biais de divers moyens d'émission par exemple optiques grâce à différents symboles, couleurs, clignotements etc. ou acoustiques au moyen de divers signaux sonores.

10. Système selon l'une quelconque des revendications 1 à 9, **caractérisé en ce que** des moyens de commande des feux de route ou des feux de croissement sont prévus et en fonction des informations transmises les feux de route ou de croissement s'allument ou s'éteignent.
